# EUROPÄISCHE PATENTSCHRIFT

(11) **EP 1 921 805 B1**
(45) Veröffentlichungstag und Bekanntmachung des Hinweises auf die Patenterteilung: **11.03.2009**
(21) Anmeldenummer: 07120029.9
(22) Anmeldetag: 06.11.2007
(51) Int. Cl.: H04L 12/46, H05B 37/02, H04L 1/08, H04L 12/28

(54) **Bussystem und Verfahren zum sicheren Übermitteln von Telegrammen in einem Bussystem**
Bus system and method for the secure transmission of frames in a bus system
Système de bus et procédé de transmission sécurisée de télégrammes dans un système de bus

(30) Priorität: 10.11.2006 DE 102006053357
(43) Veröffentlichungstag der Anmeldung: 14.05.2008
(73) Patentinhaber: SIEMENS AKTIENGESELLSCHAFT, 80333 München (DE)
(72) Erfinder: Hartmann, Michael, 93182, Duggendorf (DE)

(56) Entgegenhaltungen:
- EP-A- 0 807 888
- EP-A- 1 659 832
- DE-A1- 3 606 885
- US-A- 5 168 271
- US-A1- 2002 131 415
- US-A1- 2004 146 051
- US-A1- 2006 193 133
- US-A1- 2008 115 007
- US-B1- 6 272 151
- US-B1- 6 757 252
- COOPERSTOCK J.R.; SPACKMAN S.P.: 'The Recording Studio that Spanned a Continent' PROCEEDINGS OF THE FIRST INTERNATIONAL CONFERENCE ON WEB DELIVERING OF MUSIC (WEDELMUSIC'01) 2001, Seiten 1 - 7

## Beschreibung

Die Erfindung betrifft ein Bussystem nach dem Oberbegriff von Patentanspruch 1. Sie betrifft auch ein Verfahren zum sicheren Übermitteln von Telegrammen in einem Bussystem, in dem keine Rückantwort von einem ein Telegramm empfangenden und verarbeitenden Busteilnehmer vorgesehen ist.

Wenn in einem Bussystem ein ein Telegramm empfangender und verarbeitender Busteilnehmer eine Rückantwort an den das Telegramm absendenden Teilnehmer gibt, so ist sichergestellt, dass das Telegramm angekommen ist und gegebenenfalls sogar sicher, dass ein Befehl in dem Telegramm umgesetzt wird. In manchen einfacher gebauten Bussystemen gibt es eine solche Rückantwort des ein Telegramm erhaltenden Busteilnehmers nicht. Ein Beispiel für ein solches einfaches Bussystem ist ein DALI-Bussystem. DALI steht für "digital addressable light interface", digital adressierbare Lichtschnittstelle, und wird bei der Ansteuerung von Leuchten verwendet.

Ein Bussystem kann auch mehr als einen Bus umfassen. Dabei bilden die Busse in der Weise ein System, das Busteilnehmer eines Busses auch in der Lage sind, Telegramme an Busteilnehmer in anderen Bussen zu senden oder von diesen zu Empfangen. Die Busse sind dazu über sogenannte Gateways miteinander gekoppelt. Gateways sind dabei Busteilnehmer, die an zwei Bussen gleichzeitig angeschlossen werden können. Sie transkribieren Telegramme, die sie einem der Busse empfangen haben, in das Protokoll des jeweils anderen Busses und leiten das transkribierte Telegramm an den Empfänger im anderen Bus weiter.

In der Druckschrift EP 0 807 888 A1 wird ein Bussystem für die Luftfahrtelektronik beschrieben, das sowohl einen Bus gemäß dem ARINC 629 Standard als auch dem ARINC 429 Standard umfasst. Die Busse sind über ein Datenkonvertierungs-Gateway miteinander verbunden. Eine Nachricht, die das Gateway über einen Bus empfängt, wird in das Protokoll des anderen Busses übersetzt und an den Empfänger in diesem Bus übertragen. Da das Gateway lediglich zur Übersetzung der Nachrichten in das jeweils andere Bus-Protokoll dient, ist die Zahl der Nachrichten, die das Gateway über einen Bus empfängt, gleich der Zahl der Nachrichten, die das Gateway in dem entsprechenden anderen Bus aussendet.

Der Austausch von Nachrichten zwischen verschiedenen Busteilnehmern ist in einem Bus gemäß dem ARINC 629 Standard durch ein Zeit-Multiplex-Verfahren organisiert. Dies bedeutet, dass jedem Busteilnehmer in zyklischer Wiederholung ein Zeitschlitz zugeordnet wird, in dem er eine Nachricht an einen anderen Busteilnehmer absetzen kann. Der Standard sieht dabei vor, dass ein Busteilnehmer, der zum Zeitpunkt des ihm zugeordneten Zeitschlitzes keine neue Nachricht zu versenden hat, die letzte von ihm versendete Nachricht noch einmal sendet. In der Druckschrift US 6 757 252 B1 wird dazu eine Änderung des Standards in der Weise vorgeschlagen, dass an Stelle der Wiederholung der letzten Nachricht die Information gesendet wird, dass keine Änderung im Zustand des Busteilnehmers erfolgt ist. Dies ermöglicht eine Entlastung des Empfängers der Nachricht in der Weise, dass dieser nun in der Lage ist, ohne Verarbeitung der in der Nachricht enthaltenen Daten zu erkennen, ob neue Informationen übertragen wurden. Ist keine neue Information enthalten, kann die Nachricht verworfen werden, ohne dass sie vorher prozessiert werden musste.

In der Druckschrift EP 1 559 832 A2 wird ein Bussystem beschrieben, in dem ein DALI-Bus über ein Gateway an einen europäischen Installationsbus (EIB) angeschlossen ist. An dem DALI-Bus sind mehrere Beleuchtungs-Komponenten angeschlossen, so dass sie in ihrer Gesamtheit über den DALI-Bus als konfigurierbare Beleuchtungsanlage gesteuert werden können. Desweiteren ist beim Gegenstand der Druckschrift ein übergeordnetes Steuersystem für die Beleuchtungsanlage an den EIB angeschlossen. Dieses Steuersystem gibt Steuerbefehle über das Gateway vom EIB in den DALI-Bus ab, wo sie von den Beleuchtungs-Komponenten empfangen werden.

In einem Bussystem kann es zu Störungen bei der Telegrammübertragung kommen, insbesondere durch elektromagnetische Einkopplungen. Man hat festgestellt, dass in einem DALI-Bus ca. jedes 1000ste Telegramm nicht ankommt

In der Druckschrift DE 36 06 885 A1 wird dazu ein System zum Übertragen von Nachrichtensignalen beschrieben, bei dem innerhalb eines Zeitmultiplex-Rahmens Nachrichtensignale von denselben peripheren Einrichtungen jeweils zweimal übertragen werden. In einer zentralen Erfassungseinrichtung werden dann die innerhalb eines Multiplex-Rahmens übertragenen Signale miteinander verglichen, um anhand der Vergleichsergebnisse ermitteln zu können, ob auf der Übertragungsleitung eine Störung vorliegt.

Im Falle eines Bussystems mit einem EIB und einem DALI-Bus bringt das doppelte Versenden von Nachrichten mehrere Nachteile. Da das Gateway in den Kommunikations-Prozess mehrerer Busteilnehmer eingebunden ist, besteht bei Verdoppelung der gesendeten Nachrichten das Risiko, dass das Gateway die anfallenden Nachrichten nicht schnell genug zwischen den Bussen transferieren kann.

Es ist Aufgabe der Erfindung, für eine erhöhte Sicherheit beim Zusenden von Telegrammen zu sorgen und es dabei im Vergleich zum Stand der Technik nicht zu Verzögerungen bei der Ankunft der Telegramme in dem Fall kommt, dass die Übertragung fehlerfrei erfolgt.

Die Aufgabe wird durch ein Bussystem mit den Merkmalen gemäß Patentanspruch 1 und ein Verfahren mit den Merkmalen gemäß Patentanspruch 3 gelöst.

Die Erfindung beruht auf der Erkenntnis, dass die Sicherheit der Zusendung eines Telegramms dadurch erhöht werden kann, dass jedes Telegramm grundsätzlich zweifach gesendet wird. Ist sonst, wie oben erwähnt, nur jede 1000ste Übertragung fehlerhaft, tritt bei der Erfindung ein Fehler nur auf, wenn beide Telegrammkopien nicht ankommen, also bei jeder millionsten Telegrammübertragung zweier gleicher Telegramme. Zur weiteren Erhöhung der Übertragungssicherheit können die Telegramme auch noch öfter gesendet werden.

Bei dem erfindungsgemäßen Bussystem wird die erforderliche Kopie des Telegramms durch ein Gateway bereitgestellt, was einen ersten Bus mit einem zweiten Bus verbindet und zum Übersetzen und Übertragen von Telegrammen aus dem ersten Bus mit einem ersten Busprotokoll in den zweiten Bus mit einem zweiten Busprotokoll dient. In diesem Gateway werden erfindungsgemäß ein erster und ein zweiter Umlaufpuffer bereitgestellt, und die Telegramme werden (insbesondere nachdem sie in das zweite Busprotokoll übersetzt sind) in beiden Puffern abgelegt. Der erste Umlaufpuffer wird prioritär gegenüber dem zweiten Umlaufpuffer behandelt. Es werden jeweils alle Telegramme aus dem ersten Umlaufpuffer nacheinander entnommen und in den zweiten Bus geleitet, bis der erste Umlaufpuffer (zeitweilig) leer ist. Solange der erste Umlaufpuffer leer ist, werden jeweils Telegramme aus dem zweiten Umlaufpuffer entnommen und in den zweiten Bus geleitet.

Das prioritäre Senden der jeweils ersten Kopie des Telegramms hat den Vorteil, dass es im Vergleich zum Stand der Technik nicht zu Verzögerungen bei der Ankunft der Telegramme in dem Fall kommt, dass bereits die erste Telegrammkopie ungestört am Zielort ankommt.

Bevorzugt ist der erste Bus ein EIB-Bus (Electrical Installation Bus), und der zweite Bus ein DALI-Bus. Das erfindungsgemäße Bussystem ist dann ein typisches Bussystem, wie es bei der Ansteuerung von Leuchten verwendet wird. An dem EIB-Bus sind die Schalter für Leuchten angeschlossen, welche ein Telegramm erzeugen, und an dem DALI-Bus sind dann die Leuchten selbst angeschlossen.

Ein naheliegendes Verfahren zur Erhöhung der Sicherheit beim Zusenden von Telegrammen kann unabhängig von dem erfindungsgemäßen Bussystem so aussehen, dass jedes Telegramm unmittelbar nach dem ersten Senden unabhängig von dem zu sendenden weiteren Telegramm ein weiteres Mal gesendet wird. Bei dieser einfachen Form wird einfach jedes Telegramm sofort wiederholt.

Bei dem erfindungsgemäßen Verfahren ist jedoch vorgesehen, dass die Telegramme beim ersten Senden eine höhere Priorität haben als beim zweiten Senden, so dass die Telegramme beim ersten Senden so behandelt werden wie im Stand der Technik und es nicht zu Verzögerungen im Vergleich zu Sendeverfahren des Standes der Technik kommt.

Das erfindungsgemäße Verfahren wird dann bevorzugt wieder mithilfe des erfindungsgemäßen Bussystems verwirklicht, also unter Verwendung zweier Umlaufpuffer, von denen einer prioritär behandelt wird.

Nachfolgend wird eine bevorzugte Ausführungsform der Erfindung unter Bezug auf die Zeichnung beschrieben, wobei
- FIG 1: ein Beispiel des Absendens einer Folge von Telegrammen im Stand der Technik veranschaulicht,
- FIG 2: ein Beispiel des Absendens einer Folge von Telegrammen bei einem naheliegenden Verfahren veranschaulicht,
- FIG 3: ein Beispiel des Absendens einer Folge von Telegrammen bei einer Ausführungsform der Erfindung veranschaulicht und
- FIG 4: schematisch ein erfindungsgemäßes Bussystem veranschaulicht.

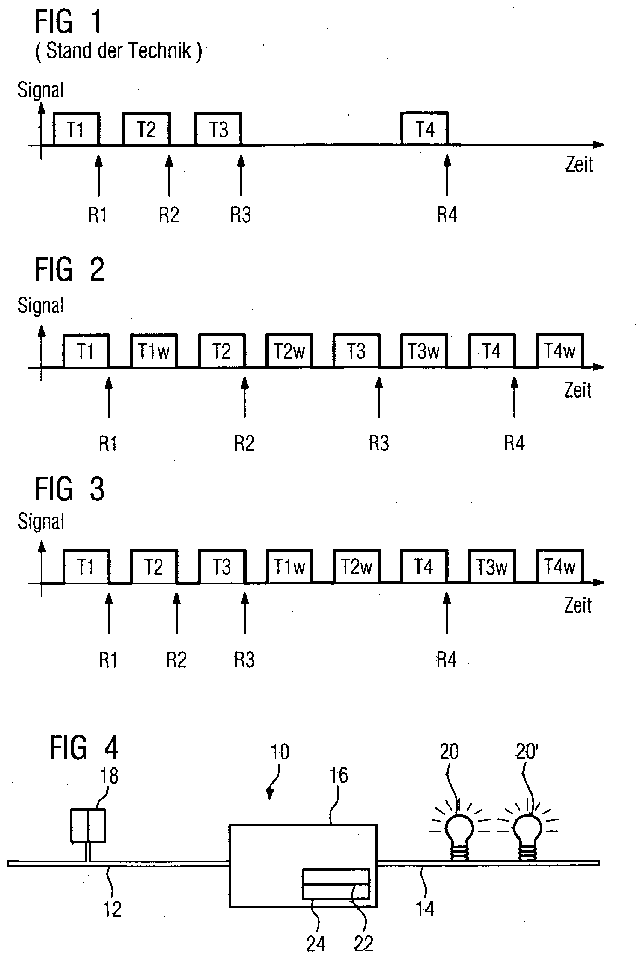

In einfacheren Bussystemen, beispielsweise in Systemen mit DALI-Bus, werden Telegramme einmal abgesendet, und es findet keine Überprüfung statt, ob die Telegramme angekommen sind. FIG 1 zeigt ein Beispiel einer zeitlichen Abfolge des Sendens von Telegrammen T1, T2, T3 und T4 über einen Bus. Nach Ankunft des Telegramms T1 an seinem Zielort findet eine Reaktion durch den Adressaten (einen Busteilnehmer) statt, siehe den R1 bezeichneten Pfeil. Genauso finden Reaktionen R2, R3 und R4 statt, wenn die Telegramme T2, T3 bzw. T4 angekommen sind.

Jedes 1000ste Telegramm kommt in einem DALI-Bus aufgrund von Störungen nicht an.

Um eine erhöhte Zuverlässigkeit bei der Ankunft von Telegrammen zu gewährleisten, wird jedes Telegramm ein weiteres Mal abgesandt. Die Figuren 2 und 3 zeigen jeweils unterschiedliche Reihenfolgen der Absendung der ersten Kopien der Telegramme T1 bis T4 und jeweils zweiter Kopien, die mit T1w, T2w, T3w und T4w bezeichnet sind, wobei "w" für "Wiederholung" steht.

Bei dem naheliegenden Verfahren gemäß FIG 2 wird jeweils das Wiederholungstelegramm unabhängig von der Existenz weiterer zu sendender Telegramme unmittelbar nach der ersten Kopie des Telegramms abgesandt. Es folgt also T1w auf T1, dann erst folgt T2, und T2w folgt direkt auf T2, dann erst folgt T3, und T3w folgt dann auf T3 etc. Der Nachteil des Verfahrens gemäß FIG 2 besteht darin, dass die Reaktionszeiten gegenüber dem Stand der Technik versetzt sind. Während in FIG 1 R2 und R3 unmittelbar auf R1 folgen, sind R2 und R3 in FIG 2 dadurch zeitlich nach hinten geschoben, dass jeweils die Telegrammkopien T1w und T2w zwischendrin gesendet werden. Auch R4 ist in FIG 2 gegenüber FIG 1 verschoben.

Bei dem erfindungsgemäßen Verfahren wird jeweils die erste Kopie des Telegramms prioritär behandelt. Dies zeigt FIG 3: T1, T2 und T3 folgen unmittelbar aufeinander wie im Stand der Technik. Dadurch folgen auch die Reaktionszeiten R1, R2 und R3 unmittelbar aufeinander, und es kommt nicht zu der in FIG 2 gezeigten Verzögerung. Bei der Telegrammfolge gemäß FIG 1 gibt es nach dem Absenden von Telegramm T3 eine Lücke. Diese wird nun bei der Ausführungsform gemäß FIG 3 dazu ausgenutzt, die Telegrammkopien T1w und T2w zu senden. Nun steht das Absenden des Telegramms T4 an. Dieses wird prioritär gegenüber der zweiten Kopie des Telegramms T3, T3w, behandelt. Erst nach T4 wird T3w abgesandt, und dann T4w.

Die Ausführungsform gemäß FIG 3 hat somit den Vorteil, dass eine erhöhte Sicherheit dafür gegeben ist, dass die Telegramme ankommen. Im Regelfall, dass das Telegramm tatsächlich ankommt, verhalten sich die Reaktionszeiten R1 bis R4 nicht anders als im Stand der Technik ohne erhöhte Sicherheit auch (vergleiche FIG 3 und FIG 1).

Das erfindungsgemäße Bussystem ist in FIG 4 dargestellt und dort im Ganzen mit 10 bezeichnet. Es umfasst einen ersten Bus 12, der beispielsweise ein EIB-Bus sein kann, und einen zweiten Bus 14, der beispielsweise ein DALI-Bus sein kann. Die beiden Busse sind über ein Gateway 16 miteinander verbunden, das Telegramme aus dem ersten Bus 12 entsprechend den jeweiligen Protokollen in Telegramme für den zweiten Bus 14 übersetzt, vorliegend also aus dem EIB-Protokoll in das DALI-Protokoll. Das Gateway 16 kann auch in umgekehrter Reihenfolge arbeiten, also DALI-Protokoll in EIB-Protokoll umwandeln und Telegramme aus dem zweiten Bus 14 in Telegramme aus dem ersten Bus 12 weiterleiten.

An dem ersten Bus 12 gezeigt ist ein Busteilnehmer 18. Dieses sei ein Doppelschalter, der Telegramme für zwei Busteilnehmer 20, 20' des zweiten Busses 14 absendet, die als einfache Leuchten gezeigt sind. Der Doppelschalter gibt also bei Betätigung ein erstes Telegramm für die Leuchte 20 und ein zweites Telegramm für die Leuchte 20' ab. Das Gateway 16 hat nun die Aufgabe, die Telegrammabgabe zu verdoppeln. Es weist einen (zum Beispiel als Softwarefunktionalität bereitgestellten) Umlaufpuffer 22 auf, und einen zweiten Umlaufpuffer 24. Das Gateway 16 übersetzt die Telegramme von dem Busteilnehmer 18 in Telegramme für den Bus 14, damit die Leuchten 20 und 20' diese empfangen und verarbeiten können. Die übersetzten Telegramme werden zweifach kopiert und zum einen in den ersten Umlaufspeicher 22 geschrieben und zum anderen in den zweiten Umlaufspeicher 24 geschrieben. Das Gateway 16 leitet dann die Telegramme in den zweiten Bus 14. Hierbei leert es zunächst den ersten Umlaufspeicher 22. Im vorliegend beschriebenen Fall von zwei Telegrammen sendet es also zunächst die beiden ersten Kopien beider Telegramme in den Bus 14. Erst, wenn der erste Umlaufspeicher 22 leer ist, wird der zweite Umlaufspeicher 24 geleert. Vorliegend würden dann also nach den beiden ersten Kopien aus dem Umlaufspeicher 22 die beiden zweiten Kopien der Telegramme aus dem Umlaufspeicher 24 in den zweiten Bus 14 geleitet werden. Der erste Umlaufspeicher 22 ist grundsätzlich prioritär zum zweiten Umlaufspeicher 24. Sobald ein neues Telegramm in den ersten Umlaufspeicher 22 geschrieben wird, wird das Entnehmen von Telegrammen aus dem zweiten Umlaufspeicher 24 beendet und zurückgestellt, bis der erste Umlaufspeicher 22 wieder leer ist.

Die Ansteuerung von Leuchten erfolgt typischerweise mithilfe eines Bussystems nach Art des Bussystems 10, so dass die Erfindung gerade im Bereich der Ansteuerung von Leuchten besonders gut umsetzbar ist.

## Patentansprüche

1. Bussystem (10), mit einem ersten Bus (12) und einem zweiten Bus (14), die über ein Gateway (16) miteinander verbunden sind, wobei an dem ersten Bus zumindest ein Teilnehmer (18) angeschlossen ist, der Telegramme mit zumindest einem Befehl in einem ersten Busprotokoll erzeugt, die über den ersten Bus (12) zu dem Gateway (16) gesandt werden, das die Telegramme aus dem ersten Busprotokoll in ein zweites Busprotokoll übersetzt und über den zweiten Bus (14) weiterleitet, wobei zumindest ein an dem zweiten Bus angeschlossener Teilnehmer (20, 20') das Telegramm empfängt und den zumindest einen Befehl aus dem Telegramm ausführt, **dadurch gekennzeichnet, dass** das Gateway (16) dazu ausgelegt ist, die Telegramme sowohl in einem ersten Umlaufpuffer (22) als auch in einem zweiten Umlaufpuffer (24) abzulegen und jeweils alle Telegramme aus dem ersten Umlaufpuffer (22) nacheinander zu entnehmen und in den zweiten Bus (14) zu leiten und solange der erste Umlaufpuffer (22) leer ist, jeweils Telegramme aus dem zweiten Umlaufpuffer (24) zu entnehmen und in den zweiten Bus (14) zu leiten.

2. Bussystem (10) nach Anspruch 1, **dadurch gekennzeichnet, dass** der erste Bus (12) ein EIB-Bus und/oder der zweite Bus (14) ein DALI-Bus ist.

3. Verfahren zum sicheren Übermitteln von Telegrammen in einem Bussystem (10), in dem keine Rückantwort von einem ein Telegramm empfangenden und verarbeitenden Busteilnehmer vorgesehen ist, **dadurch gekennzeichnet, dass** jedes Telegramm zumindest zweifach gesendet wird und jeweils die Telegramme beim ersten Senden eine höhere Priorität erhalten als beim zweiten Senden (FIG 3).

4. Verfahren nach Anspruch 3, **dadurch gekennzeichnet, dass** die Telegramme von Teilnehmern (18) eines ersten Busses (12) jeweils einfach erzeugt werden, zu einem Gateway (16) gesandt werden, das die Telegramme aus einem ersten Busprotokoll in ein zweites Busprotokoll übersetzt, die übersetzten Telegramme kopiert und eine erste Kopie in einen ersten Umlaufpuffer (22) schreibt und eine zweite Kopie in einen zweiten Umlaufpuffer (24) schreibt, wobei das Gateway (16) die Telegramme jeweils den Umlaufpuffern (22, 24) entnimmt und in den zweiten Bus leitet und hierbei die Telegramme aus dem ersten Umlaufpuffer (22) gegenüber den Telegrammen aus dem zweiten Umlaufpuffer (24) prioritär behandelt.

## Claims

1. Bus system (10), with a first bus (12) and a second bus (14) which are connected to each other via a gateway (16), with at least one user (18) being connected to the first bus which generates telegrams with at least one command in a first bus protocol, which are sent over the first bus (12) to the gateway (16), which translates the telegrams from the first bus protocol into a second bus protocol and forwards them over the second bus (14), with at least one user (20, 20') connected to the second bus receiving the telegram and executing at least one command from the telegram, **characterized in that** the gateway (16) is designed to store the telegrams both in a first cyclic buffer (22) and also in a second cyclic buffer (24) and in each case to remove all telegrams in turn from the first cyclic buffer (22) and direct them into the second bus (14) and, for as long as the first cyclic buffer (22) is empty, to take telegrams out of the second cyclic buffer (24) in each case and direct them into the second bus (14).

2. Bus system (10) according to claim 1, **characterized in that** the first bus (12) is an EIB bus and/or the second bus (14) is a DALI bus.

3. Method for secure transfer of telegrams in a bus system (10), in which there is no provision for a reply from a bus user receiving and processing a telegram, **characterized in that** each telegram is sent at least twice and the telegrams are given a higher priority when first sent than they are given the second time that they are sent (FIG. 3).

4. Method according to claim 3, **characterized in that** the telegrams from users (18) of a first bus (12) are generated once, are sent to a gateway (16) which translates the telegrams from a first bus protocol into a second bus protocol, copies the translated telegrams and writes a first copy into a first cyclic buffer (22) and writes a second copy into a second cyclic buffer (24), with the gateway (16) taking the telegrams out of the cyclic buffers (22, 24) in each case and directing them into the second bus and, in doing so, prioritizing the handling of the telegrams from the first cyclic buffer (22) compared to the telegrams from the second cyclic buffer (24).

## Revendications

1. Système de bus (10), comprenant un premier bus (12) et un second bus (14), qui sont reliés l'un à l'autre par une passerelle (16), au moins un abonné (18) étant raccordé au premier bus, lequel abonné génère des télégrammes avec au moins une instruction dans un premier protocole de bus, lesquels sont envoyés par le premier bus (12) à la passerelle (16), qui transfère les télégrammes du premier protocole de bus dans un second protocole de bus et les transmet par le second bus (14), au moins un abonné (20, 20') raccordé au second bus recevant le télégramme et exécutant ladite au moins une instruction provenant du télégramme, **caractérisé en ce que** la passerelle (16) est conçue pour déposer les télégrammes aussi bien dans un premier tampon de circulation (22) que dans un second tampon de circulation (24) et prélever à chaque fois tous les télégrammes provenant du premier tampon de circulation (22) les uns après les autres et les acheminer dans le second bus (14) et, aussi longtemps que le premier tampon de circulation (22) est vide, prélever respectivement des télégrammes du second tampon de circulation (24) et les acheminer dans le second bus (14).

2. Système de bus (10) selon la revendication 1, **caractérisé en ce que** le premier bus (12) est un bus EIB et/ou le second bus (14) est un bus DALI.

3. Procédé pour la transmission sûre de télégrammes dans un premier système de bus (10), dans lequel il n'est prévu aucune réponse provenant d'un abonné de bus assurant la réception et le traitement d'un télégramme, **caractérisé en ce que** chaque télégramme est envoyé au moins deux fois et à chaque fois les télégrammes présentent lors de la première émission une priorité supérieure à celle de la seconde émission (FIGURE 3).

4. Procédé selon la revendication 3, **caractérisé en ce que** les télégrammes d'abonnés (18) d'un premier bus (12) sont générés à chaque fois une fois, sont envoyés à une passerelle (16), qui transfère les télégrammes d'un premier protocole de bus dans un second protocole de bus, copie les télégrammes transférés et enregistre une première copie dans un premier tampon de circulation (22) et enregistre une seconde copie dans un second tampon de circulation (24), la passerelle (16) prélevant les télégrammes à chaque fois dans chacun des tampons de circulation (22, 24) et les acheminant dans le second bus et traitant à cette occasion les télégrammes provenant du premier tampon de circulation (22) de façon prioritaire par rapport aux télégrammes provenant du second tampon de circulation (24).
